# EUROPÄISCHE PATENTSCHRIFT

(11) **EP 3 209 742 B1**
(45) Veröffentlichungstag und Bekanntmachung des Hinweises auf die Patenterteilung: **01.12.2021**
(21) Anmeldenummer: 15784652.8
(22) Anmeldetag: 22.10.2015
(51) Int. Cl.: C09J 123/02, C08L 23/02, C08L 23/20

(54) **SCHMELZKLEBSTOFFE FÜR POLYOLEFINFOLIEN**
HOT MELT ADHESIVE FOR POLYOLEFIN FILMS
ADHÉSIFS THERMOFUSIBLES POUR POLYOLÉFINES

(30) Priorität: 23.10.2014 DE 102014221553
(43) Veröffentlichungstag der Anmeldung: 30.08.2017
(73) Patentinhaber: Henkel AG & Co. KGaA, 40589 Düsseldorf (DE)
(72) Erfinder: HERLFTERKAMP, Bernhard, 46236 Bottrop (DE); PÜRKNER, Eckhard, 40595 Düsseldorf (DE); SWAIN, Andy, Chesham Buckinghamshire SL2 5DS (GB); KLINGBERG, Wolfgang, 41352 Korschenbroich (DE); HÜBENTHAL, Marcel, 42781 Haan (DE); ECKERS, Mario, 41844 Wegberg (DE); STRENGER, Stefan, 42579 Heiligenhaus (DE); THOMAS, Julia, Wokingham Berkshire RG41 4BE (GB); KLEWE, Oliver, 40764 Langenfeld (DE); MILLS, Kevin, High Wycombe Buckinghamshire HP157TG (GB); CASPERS, Alexander, 41363 Jüchen (DE); SCHRÖTTLE, Michael, 41470 Neuss (DE); EASDOWN, George, Church Crookham Hampshire GU52 6LR (GB)
(86) Internationale Anmeldenummer: PCT/EP2015/074452
(87) Internationale Veröffentlichungsnummer: WO 2016/062797

(56) Entgegenhaltungen:
- WO-A1-2007/070091
- WO-A1-2008/022828
- WO-A1-2010/070046
- WO-A2-2006/102150
- JP-A- 2009 057 397
- US-A1- 2010 132 886

## Beschreibung

Die Erfindung betrifft Schmelzklebstoffe zum Verkleben von folienförmigen Substraten, Gewebe oder Vliesstoffen, insbesondere Polyolefinfolien, hergestellt auf Basis polyolefinischer Polymere, die zusammen mit weiteren Zusatzstoffen Schmelzklebstoffe mit verbesserten Migrationseigenschaften ergeben. Weiterhin werden geeignete Verwendungen für derartige Schmelzklebstoffe und Produkte, die diese Klebstoffe enthalten bzw. unter deren Verwendung hergestellt werden können, beschrieben. Des Weiteren betrifft die Erfindung ein Verfahren zur Herstellung von Verpackungen aus Polyolefinfolien unter Verwenden der spezifischen Schmelzklebstoffe der vorliegenden Erfindung.

Handelsübliche Tüten und Beutel aus Polyolefinen werden typischerweise entweder durch Hitzeschweißen von zwei übereinander gelegten Kunststoffbahnen oder durch Verkleben zweier übereinander gelegter Kunststoffbahnen an den Seiten (Seitennaht) sowie im Bodenbereich (Bodendeckblatt) hergestellt.

Zur Verklebung dieser polyolefinischen Materialien bei der Herstellung von Tüten und Beuteln werden seit vielen Jahren Haftklebstoffe auf Basis von Styrol-Isopren-Styrol- und Styrol-Butadien-Styrol-Kautschuken eingesetzt.

Aufgrund des schwierig zu verklebenden polyolefinischen Materials und der hohen Anforderungen in Bezug auf Adhäsion und Kohäsion in einem weiten Temperaturbereich von -20 bis 80°C, muss diesen Kautschuken eine große Menge an Hilfsstoffen zur Verbesserung der Adhäsion zugesetzt werden, da ohne derartige Hilfsstoffe die Qualität der Verklebung unzureichend ist. Als Hilfsstoffe kommen hier vor allem Klebharze und Öle zum Einsatz.

Die Klebharze können dabei chemisch sehr unterschiedliche Substanzen sein, üblicherweise sind es aber Ester der Abietinsäure (Kollophonium) oder Terpen-Phenolharze. Als Öle haben sich mineralische Öle, zum einen paraffinische, zum anderen sogenannte naphthenische Öle als besonders geeignet erwiesen, um einen ausreichend weichen und oberflächenklebrigen Film dieser Kautschukklebstoffe zu erzielen.

Die bisher verwendeten Kautschukklebstoffe sind allerdings in vielerlei Hinsicht nachteilig. Zum einen benötigen sie große Mengen spezieller Harze, die auf Erdöl-Rohstoffen basieren und deren Verfügbarkeit oft eingeschränkt ist. Des Weiteren ist die Synthese dieser Harze aufwendig. Aufgrund dieser Tatsachen sind diese Harze im Hinblick auf ihre Kosten nachteilig. Ferner haben sie einen charakteristischen Eigengeruch, der auf die Inhalte der Beutel/Tüten übergehen kann, was insbesondere im Lebensmittelbereich unerwünscht ist.

Die eingesetzten Öle haben darüber hinaus noch schwerwiegende Nachteile. Ähnlich wie die Harze basieren sie auf Rohöl und sind daher schon im Hinblick auf Kosten und schwindende Ressourcen nachteilig. Darüber hinaus enthalten sie eine Vielzahl von Verbindungen, insbesondere auch polyzyklische-aromatische Anteile, die auf das Füllgut übergehen und deshalb ein hohes Gefährdungspotential für die Verbraucher, insbesondere im Lebensmittel- und Pharmabereich, darstellen. Besonders nachteilig ist hierbei, dass die Öle durch ihr niedriges Molekulargewicht und die niedrige Polarität schon bei Raumtemperatur sehr niedrigviskose Flüssigkeiten sind und daher auch im Gemisch mit Harzen und Polymeren eine hohe Migrationsfähigkeit behalten. Diese Fähigkeit zur Migration bezieht sich sowohl auf das Durchdringen der verklebten Materialien als auch auf das Eindringen in das Füllgut.

US 2010/132886 A1 beschreibt einen Klebstoff und Verfahren zum Auftragen von einem Schmelzklebstoff, welcher Polyolefin-Basispolymer und 1 bis 15 Gew.-% von mindestens zwei Wachskomponenten umfasst. WO 2010/070046 A1 eine offenbart Kontaktklebstoffschicht, hergestellt aus einem Schmelzklebstoff, enthaltend 10 bis 60 Gew.-% mindestens eines Copolymers auf Basis von Ethylen und mindestens einem C₃- bis C₂₀-Olefin, das durch metallocenkatalysierte Polymerisation erhalten wird. WO 2008/022828 A1 beschreibt einen Schmelzklebstoff auf Basis mindestens eines Ethylen und/oder Propylen/C₄ bis C₂₀ α-Olefin Copolymeren, das durch metallocenekatalysierte Polymerisation erhältlich ist und seine Verwendung zur Verklebung von veredelten Substratoberflächen. WO 2007/070091 A1 offenbart eine elastische Schmelzklebstoffzusammensetzung auf Polyolefinbasis mit Ölbeständigkeit, Kriechbeständigkeit und ausgezeichneter Haftfestigkeit. JP 2009057397 A beschreibt einen Schmelzklebstoff, der eine Sprühbeschichtung bei vergleichsweise niedrigen Temperaturen ermöglicht, eine große Anfangsklebkraft und eine ausgezeichnete Produktivität aufweist und eine ausgezeichnete Klebefähigkeit und hitzebeständige Klebefähigkeit bei der Verklebung zwischen kaum klebenden Substraten oder dergleichen, wie Polyolefin oder Polyester, besitzt.

Es besteht daher Bedarf an weiteren Klebstoffen, in denen der Einsatz derartiger Hilfsstoffen reduziert oder sogar ganz vermieden werden kann, um damit eine höhere Produktsicherheit für die Verbraucher zu gewährleisten. Gleichzeitig sollten die verwendeten Klebstoffe aber eine zu den bekannten Klebstoffen vergleichbare Klebewirkung (Adhäsion/Kohäsion) und Flexibilität aufweisen.

Die vorliegende Erfindung löst dieses Problem durch die Bereitstellung neuartiger Klebstoffe, insbesondere Schmelzhaftklebstoffe, auf Basis polyolefinischer Polymere.
1. In einem ersten Aspekt betrifft die Erfindung daher einen Schmelzklebstoff, enthaltend
   a) 50 bis 85 Gew.-% mindestens eines polyolefinischen Polymers;
   b) 1 bis 40 Gew.-% mindestens eines klebrig machenden Harzes;
   c) bis 15 Gew.-% mindestens eines Weichmachers; und
   d) 0 bis 30 Gew.-% mindestens eines Additive und/oder Zusatzstoffs ausgewählt aus Stabilisatoren, Haftvermittlern, Füllstoffen oder Pigmenten, Wachsen und/oder anderen Polymeren oder Kombinationen davon,
      dadurch gekennzeichnet, dass das mindestens eine polyolefinische Polymer eine Mischung ist aus:
         a1) mindestens einem ersten polyolefinischen Polymer mit einem Molekulargewicht Mₙ von < 10.000 g/mol in einer Menge von 20 bis 80 Gew.-% bezogen auf die Gesamtmenge an polyolefinischem Polymer und
         a2) mindestens einem zweiten polyolefinischen Polymer mit einem Molekulargewicht Mn von > 10.000 g/mol in einer Menge von 20 bis 80 Gew.-% bezogen auf die Gesamtmenge an polyolefinischem Polymer; und
      dadurch gekennzeichnet, dass der Weichmacher ausgewählt wird aus Poly(iso)butylen und flüssigen oder pastösen hydrierten Kohlenwasserstoffen.

In einem weiteren Aspekt betrifft die Erfindung auch die Verwendung der erfindungsgemäßen Schmelzklebstoffe zum Verkleben von folienförmigen Substraten, insbesondere Polyolefinfolien, Gewebe oder Vliesstoffen.

Noch ein Aspekt der Erfindung betrifft Verfahren zur Herstellung von Verpackungen aus Polyolefinfolien, insbesondere Beuteln aus Polyolefinen, umfassend das teilflächige Verkleben von mindestens zwei Polyolefinfolien in Form von Längs- und/oder Bodenklebungen, wobei zum Verkleben der Schmelzklebstoff gemäß der Erfindung verwendet wird. Ebenfalls betrifft die Erfindung ein Verfahren zur Herstellung von verklebtem Gewebe oder Vliesstoff, umfassend das teil- oder vollflächige Verkleben von mindestens zwei Substraten, dadurch gekennzeichnet, dass mindestens ein Substrat eine Gewebe oder Vliesstoff ist und, dass zum Verkleben der Schmelzklebstoff gemäß der Erfindung verwendet wird.

Schließlich erfasst die Erfindung in noch einem weiteren Aspekt auch die Verpackungen aus Polyolefinfolien, insbesondere Beutel oder Tüten, die ein oder mehrere Folien aus Polyolefinen umfassen, die gemäß den erfindungsgemäßen Verfahren erhältlich sind.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Die im vorliegenden Text angegebenen Molekulargewichte beziehen sich, soweit nicht anders angegeben, auf das Zahlenmittel des Molekulargewichts (Mn). Das Molekulargewicht Mn kann auf Basis einer Endgruppenanalyse (Hydroxylzahl gemäß DIN 53240-1:2013-06), oder durch Gelpermeationschromatographie (GPC) gemäß DIN 55672-1:2007-08 mit THF als Eluent bestimmt werden. Falls nicht anders angegeben, sind die aufgeführten Molekulargewichte solche, die mittels GPC bestimmt wurden. Das Gewichtsmittel des Molekulargewichts Mw kann ebenfalls mittels GPC, wie vorstehend angegeben, bestimmt werden.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Harz" bedeutet somit beispielsweise mindestens eine Art von Harz, d.h. dass eine Art von Harz oder eine Mischung mehrerer verschiedener Harze verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Die Schmelzklebstoffe der vorliegenden Erfindung enthalten mindestens ein polyolefinisches Polymer, wobei das Polymer bezogen auf sein Gesamtgewicht 50 bis 85 Gew.-% mindestens eines ersten polyolefinischen Polymers mit einem Molekulargewicht Mₙ von < 10.000 g/mol und 20 bis 80 Gew.-% mindestens eines zweiten polyolefinischen Polymers mit einem Molekulargewicht Mₙ von > 10.000 g/mol enthält, wobei die Summe 100 % betragen soll. In einer stärker bevorzugten Ausführungsform enthält der Schmelzklebstoff der vorliegenden Erfindung mindestens ein polyolefinisches Polymer, wobei das Polymer bezogen auf sein Gesamtgewicht 50 bis 80 Gew.-% mindestens eines ersten polyolefinischen Polymers mit einem Molekulargewicht Mₙ von < 10.000 g/mol und 20 bis 50 Gew.-% mindestens eines zweiten polyolefinischen Polymers mit einem Molekulargewicht Mₙ von > 10.000 g/mol enthält, wobei die Summe 100 Gew.-% betragen soll.

In bevorzugten Ausführungsformen beträgt im erfindungsgemäßen Schmelzklebstoff der Mₙ von a1) <10.000 g/mol und der Mₙ von a2) > 25.000 g/mol, stärker bevorzugt beträgt der Mₙ von a1) <9.000 g/mol und der Mₙ von a2) > 50.000 g/mol, am stärksten bevorzugt beträgt der Mₙ von a1) <8.000 g/mol und der Mₙ von a2) > 100.000 g/mol. In weiteren bevorzugten Ausführungsformen beträgt zudem zu den vorstehend genannten Bereichen die Untergrenze für a1) 1.000 g/mol und die Obergrenze für a2) 500.000 g/mol.

Als polyolefinische Polymere sind beispielsweise Homo- und Copolymeren von Polyolefinen, insbesondere bevorzugt ausgewählt aus der Gruppe bestehend aus Poly-α-Olefinen, vorzugsweise ataktischen Poly- α-Olefinen (APAO) auf Basis von Ethylen, Propen und/oder Buten, und Ethylen/α-Olefin und Propylen/α-Olefin Copolymeren, vorzugsweise Copolymere von Ethylen und Propen, 1-Buten, 1-Hexen, 1-Octen, oder einer Kombination davon.

Bei den erfindungsgemäß geeigneten Copolymeren kann es sich um Blockcopolymere handeln und die Blöcke können dabei gegebenenfalls eine unterschiedliche Zusammensetzung der Monomeren aufweisen.

In bevorzugten Ausführungsformen zeichnen sich die eingesetzten polyolefinischen Polymere dadurch aus, dass sie eine enge Molekulargewichtsverteilung aufweisen. Die Molekulargewichtsverteilung ausgedrückt als M_{W}/M_{N} soll bevorzugt 2,5 betragen, stärker bevorzugt unter 2,3. Solche Polymere sind in der Literatur bekannt und können von verschiedenen Herstellern kommerziell erhalten werden.

Geeignete Copolymere aus Ethylen/Propylen zusammen mit mindestens einem (C₃ bis C₂₀)-α-Olefinmonomeren, insbesondere metallocene-katalysierte Polymere, werden beispielsweise in den Patentanmeldungen EP 0912646 A1, WO 00/00565 A1, WO 2001/46277 A2, WO 2006/102150 A2, WO 2005/090426 A1, WO 2010/026172 A1, und WO 2010/070046 A1 und in der Patentschrift US 6586543 B1 beschrieben. Derartige Copolymere sind kommerziell erhältlich, beispielsweise Olefin-Block-Copolymere unter den Handelsnamen Infuse^{™} (Dow Chemical Corporation), insbesondere Infuse^{™} 9807 oder 9808 oder Queo^{™} (Borealis), insbesondere Queo^{™} 8230. Weitere geeignete Olefin-Plastomere sind auch unter den Handelsnamen Vistamaxx^{™} (Exxon) und Affinity^{™} (Dow Chemical Company). Ebenfalls geeignet und erfindungsgemäß bevorzugt sind die unter dem Handelsnamen Vestoplast^{®} von Evonik erhältlichen Poly-α-olefine.

Weiterhin enthält ein erfindungsgemäßer Schmelzklebstoff mindestens ein Harz. Das Harz soll das Basispolymer klebrig machen. Es wird im Allgemeinen in einer Menge von 1 bis 40 Gew.-%, in Bezug auf das Gesamtgewicht des Schmelzklebstoffs. Es ist erfindungsgemäß bevorzugt, dass die Menge an eingesetztem Harz so gering wie möglich gewählt wird, beispielsweise in dem Bereich von 1 bis 10 Gew.-%, in Bezug auf das Gesamtgewicht des Schmelzklebstoffs.

Es können im Prinzip die bekannten Harze, wie beispielsweise aromatische, aliphatische oder cycloaliphatische Kohlenwasserstoffharze, jeweils auch in voll oder teilweise hydrierter Form, sowie modifizierte oder hydrierte Naturharze eingesetzt werden. Geeignete im Rahmen der Erfindung anwendbare Harze sind z.B. cycloaliphatische Kohlenwasserstoffharze, Terpen-Harze, wie Terpolymere oder Copolymere des Terpens, Naturharze auf Kolophonium- oder Tallharzbasis inklusive ihrer Derivate, wie beispielsweise ihrer Methyl-, Pentaerythritol- oder Glycerinester, andere modifizierte Naturharze wie Harzsäuren aus Balsamharz, Tallharz oder Wurzelharz, ggf. auch Hydroabietylalkohol und seine Ester, Acrylsäure-Copolymerisate, wie Styrol-Acrylsäure-Copolymere oder Copolymerisate aus Ethylen, Acrylatestern und Maleinsäureanhydrid, oder Harze auf Basis funktioneller Kohlenwasserstoffharze.

Naturharze auf Kolophonium- oder Tallharzbasis werden insbesondere aus Koniferen als Nebenprodukt der Papierherstellung gewonnen. Kolophoniumharz ist typischerweise eine Mischung von 8 Harzsäuren, nämlich Abietinsäure, Neoabietinsäure, Dehydroabietinsäure, Palustrinsäure, Lävopimarsäure, Pimarsäure, Isopimarsäure und Sandaracopimarsäure. Das Harz kann durch Hydrogenierung, Veresterung, vorzugsweise mit Alkoholen, wie Methanol, Triethylenglycol, Glycerin und Pentaerythritol, Dimerisierung und Funktionalisierung modifiziert werden. Funktionalisierung bezieht sich vorzugsweise auf die weitere Veresterung der Polyolester, wie den vorstehend genannten, mit Disäuren, wie Malein- oder Fumarsäure. Geeignete Harze sind beispielsweise unter den Handelsnamen Sylvatac^{®} (Arizona Chemical), insbesondere Sylvatac^{®} RE85, Staybelite^{™} A rosin acid (Pinova Inc.), Staybelite^{™} E rosin ester (Eastman) und PEXALYN^{®} T100 (Pinova Inc) erhältlich.

Bei dem mindestens einen klebrig machenden Harz kann es sich um ein einzelnes Harz oder bevorzugt eine Harzmischung der vorstehend genannten handelt.

In verschiedenen Ausführungsformen umfasst das Harz ein voll- oder teilhydriertes Kohlenwasserstoffharz und/oder mindestens ein Naturharz auf Kolophonium- oder Tallharzbasis oder eines Methyl-, Pentaerythritol- oder Glycerinesters oder einer Kombination davon. Das mindestens eine voll- oder teilhydrierte Kohlenwasserstoffharz kann insbesondere ein cycloaliphatisches Harz, ein aromatisch modifiziertes Harz, ein Polyterpen, ein Terpen-Phenolharz, ein 1,3-Pentadienharz, ein Cyclopentadienharz, ein 2-Methyl-2-Buten-Copolymer oder ein Derivat oder eine Kombination der vorgenannten umfassen.

Eine beispielhafte Mischung besteht aus aromatisch modifizierten C5-Kohlenwasserstoffharzen mit einem Erweichungspunkt zwischen 95 und 105 °C, wie sie beispielsweise unter dem Handelsnamen Wingtack^{™} Extra Flakes (Cray Valley, USA) kommerziell erhältlich sind, und aromatisch modifizierten, hydrierten, bei Raumtemperatur flüssigen C9-Kohlenwasserstoffharzen, wie sie beispielsweise unter dem Handelsnamen Regalite^{™} R (Eastman, USA) kommerziell erhältlich sind.

Generell werden vorzugsweise Harze bzw. Harzmischungen eingesetzt, die einen Erweichungspunkt von 80 bis 130°C besitzen. Eine andere besondere Ausführungsform setzt Harze ein, die einen Erweichungspunkt unterhalb von 50°C aufweisen, insbesondere können diese auch flüssig sein.

Der Erweichungspunkt wird mit der Ring & Ball Methode (ASTM-Methode E28; ISO 4625) bestimmt.

Ein weiterer Bestandteil sind Weichmacher. Diese können allgemein ausgewählt werden aus Mineralölen, Poly(iso)butylen und flüssigen oder pastösen hydrierten Kohlenwasserstoffen. Bevorzugt handelt es sich dabei um hydrierte Kohlenwasserstoffe mit einer Konsistenzkennzahl von 000, 00, 0, 1, 2, 3, 4, oder 5 gemäß DIN 51818.

Geeignete Weichmacher umfassen, sind aber nicht beschränkt auf medizinische Weißöle, naphthenische Mineralöle, Polypropylen-, Polybutylen-, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Es können auch Ester als Weichmacher eingesetzt werden, z. B. flüssige Polyester und Glycerinester. Dabei soll das Molekulargewicht Mw von Polybutylenoligomeren vorzugsweise im Bereich 200 bis 6 000 g/mol liegen, Polyolefine sollten ein Molekulargewicht M_{w} bis etwa 2000 g/mol aufweisen, insbesondere bis 1000 g/mol. Insbesondere sind Poly(iso)butylene und flüssige oder pastöse hydrierte Kohlenwasserstoffe geeignet. Ganz besonders bevorzugt ist Polyisobutylen mit einem Molekulargewicht Mw kleiner 5000. In verschiedenen bevorzugten Ausführungsformen ist der erfindungsgemäße Klebstoff frei von Weichmachern bzw. die Weichmacherkomponente ist frei von Mineralölen, insbesondere paraffinischen und/oder naphthenischen Ölen, und aromatischen Kohlenwasserstoffen.

"Frei von" bedeutet in der vorliegenden Erfindung, dass die Konzentration des entsprechenden Bestandteils <0,1 Gew.-%, vorzugsweise <0,01 Gew.-% bezogen auf das Gesamtgewicht der Zusammensetzung ist.

Die Menge an Weichmachern sollte bis maximal 15 Gew.-% betragen. Ein zu hoher Anteil von Weichmachern kann zu verringerten kohäsiven Eigenschaften des Klebstoffs führen.

Gegebenenfalls können dem Schmelzklebstoff Wachse in Mengen von 0,5 bis 5 Gew.-% zugegeben werden. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden oder Mineralwachse oder petrochemische Wachse. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung.

Vorzugsweise werden petrochemische Wachse wie Petrolatum, Paraffinwachse, mikrokristalline Wachse sowie synthetische Wachse eingesetzt. Besonders bevorzugt sind paraffinische und/oder mikrokristalline Wachse und/oder hydrierter Versionen davon, insbesondere Polypropylen- oder Polyethylenwachs mit einem Tropfpunkt bestimmt nach ASTM D-3954 von 50°C bis 170°C.

Die erfindungsgemäßen Schmelzklebstoffe können neben den oben genannten Bestandteilen noch weitere, üblicherweise in Schmelzklebstoffen eingesetzte Bestandteile als Additive enthalten. Hierzu zählen beispielsweise Stabilisatoren, Haftvermittler, Antioxidantien, Füllstoffe und/oder Pigmente. Damit können bestimmte Eigenschaften des Klebstoffs, wie z. B. Kohäsion, Stabilität, Haftung oder Festigkeit beeinflusst werden. Die Menge der Additive und Zusatzstoffe kann vorzugsweise 0 bis 3 Gew.-% betragen. Besonders bevorzugte Additive schließen Stabilisatoren gegen thermischen und oxidativen Abbau und Abbau durch UV-Strahlung ein.

Additive, wie Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist. Beispielsweise können als Stabilisatoren die unter dem Handelsnamen Irganox^{®} (BASF SE) erhältlichen Antioxidantien, vorzugsweise in Mengen von 0,5 bis 1 Gew.-% bezogen auf die Zusammensetzung eingesetzt werden.

Als optionalen Bestandteil kann der erfindungsgemäße Schmelzklebstoff 0 bis 8 Gew.-%, insbesondere 2 bis 5 Gew.-%, von weiteren gegenüber den erfindungsgemäßen Copolymeren unterschiedlichen Polymeren enthalten. Insbesondere soll die Menge dieser Polymere weniger als die erfindungsgemäß notwendigen Mengen der erfindungsgemäßen olefinischen Polymere betragen. Diese Polymere können verschiedene anwendungstechnische Eigenschaften des Schmelzklebstoffs verbessern, z. B. Wärmestandfestigkeit, Kälteflexibilität, Kohäsion und Haftung des aufgetragenen Klebstoffs. Diese weiteren Polymere weisen vorzugsweise keine unter den Herstell- und Lagerbedingungen vernetzenden Gruppen auf.

In weiteren Ausführungsformen kann der Schmelzklebstoff daher zusätzlich mindestens ein elastisches Polymer auf Basis von Olefinen und (Meth)acrylsäureestern enthalten, das Carboxylgruppen und/oder Anhydridgruppen aufweist. Die Olefinmonomere können aus den bekannten C₂ bis C₅-Olefinen ausgewählt werden, insbesondere Ethylen oder Propylen. Die (Meth)acrylsäureester werden aus (Meth)Acrylestern mit niedermolekularen C₁ bis C₈-Alkanolen ausgewählt, insbesondere sind Methyl(meth)acrylat, Ethyl(meth)acrylat, Propyl(meth)acrylat, Butyl(meth)acrylat oder 2-Ethylhexyl(meth)acrylat einzeln oder im Gemisch geeignet. Das Copolymere muss noch Carboxylgruppen und/oder Anhydridgruppen aufweisen. Das kann durch Polymerisation mit entsprechenden funktionellen Monomeren geschehen oder durch nachträgliche Modifikation der Polyolefincopolymere. Beispielsweise ist es möglich, durch Oxidation COOH-Gruppen einzuführen. Weiterhin ist es möglich, durch radikalische Pfropfungsreaktionen, beispielsweise mit Maleinsäureanhydrid, COOH- oder Anhydrid-Gruppen in das Polymere einzuführen. Besonders bevorzugt sind Terpolymere aus Ethylen, Acrylsäureester und Maleinsäureanhydrid mit einem Schmelzflussindex von 100-300/10 Minuten bei 190°C und einer Prüflast von 2,6 kg (gemäß ISO 1133).

Derartige Polymere weisen üblicherweise ein Molekulargewicht (Mₙ) zwischen 3000 und 50000 g/mol auf, insbesondere 8000 bis 25000 g/mol. Die Menge der COOH-/ Anhydrid-Gruppen beträgt insbesondere zwischen 1 bis 100 mg KOH/g, besonders bevorzugt zwischen 5 bis 50 mg KOH/g. Ist die Anzahl der Carboxylgruppen hoch, so ist die Verträglichkeit der Bestandteile des Schmelzklebstoffs problematisch. Der Erweichungspunkt kann im Bereich von 50°C bis 150°C liegen, insbesondere von 90 bis 110°C. Die Menge der COOH-Gruppen tragenden Polymerisats sollte zwischen 0 bis 15 Gew.-% betragen insbesondere zwischen 0,5 bis 10 Gew.-%. Geeignete Carboxylgruppen aufweisende Polymerisate sind kommerziell erhältlich und dem Fachmann bekannt.

Während die elastischen Polymere die Flexibilität des Schmelzklebstoffs beeinflussen, kann die Kohäsion durch Anteile an zusätzlichen, nicht flexiblen thermoplastischen Polymeren verbessert werden. Insbesondere sind die bekannten thermoplastischen Polymere, wie EVA, hochmolekulare Polyolefine, wie Poly-1-Buten, geeignet.

In bevorzugten Ausführungsformen ist der Schmelzklebstoff frei von polyzyklischen-aromatischen-Kohlenwasserstoffen.

Der erfindungsgemäße Schmelzklebstoff wird durch bekannte Verfahren durch Mischen in der Schmelze hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben. Es ist auch möglich und bevorzugt, den Schmelzklebstoff kontinuierlich in einem Extruder herzustellen. Der geeignete Schmelzklebstoff ist fest und, bis auf Verunreinigungen, frei von Lösemitteln

Der erfindungsgemäß geeignete Schmelzklebstoff weist vorzugsweise eine Viskosität von etwa 500 mPas bis 100.000 mPas auf, besonders bevorzugt 5.000 bis 20.000, gemessen bei 160°C (Brookfield RVT, Spindel 27). Es ist ferner bevorzugt, dass er einen Erweichungspunkt (Ring & Ball, ASTM E 28) von mehr als 70°C, insbesondere mehr als 80°C aufweist.

Die hierin beschriebenen Schmelzklebstoffe sind insbesondere zum Verkleben von folienförmigen Substraten geeignet, vorzugsweise als Schmelzhaftklebstoffe zum Verkleben von mindestens zwei Folienbahnen, stärker bevorzugt in Form von Seiten- bzw. Bodennähten. Eine weitere bevorzugte Möglichkeit zur Herstellung der Folienbehälter besteht darin, einen einzelnen Folienbogen oder eine einzelne Folienbahn zu falten, z.B. mittels eines Doms, und die durch die Faltung entstandenen Folienabschnitte mindestens in Teilbereichen, vorzugsweise an mindestens einem Randbereich miteinander zu verkleben. Wird beispielsweise eine Folienbahn gefaltet und die so entstandenen Folienabschnitte entlang der gesamten Länge der Folienbahn miteinander verklebt, entsteht ein Folienschlauch, der im Anschluss beispielsweise rechtwinklig zur Längsachse der Folienbahn geschnitten und gegebenenfalls in einem weiteren Randbereich verklebt werden kann.

Auf diese Weise können verschiedenste Folienverpackungen, wie beispielsweise Tüten oder Beutel hergestellt werden. Die Schmelzklebstoffe der vorliegenden Erfindung sind ebenfalls zum Verkleben von Geweben oder Vliesstoffen geeignet.

Als Material für diese folienförmigen Substrate, die unter anderem in Tüten und Beuteln eingesetzt werden, kommt vorzugsweise Polyolefin zum Einsatz, insbesondere Polyethylen (PE) und Polypropylen (PP), wobei dieses als Bahnenmaterial oder in anderer Konfektionierungsform mit oder ohne Oberflächenbehandlung oder -beschichtung eingesetzt werden kann. Oberflächenvorbehandelte Materialien schließen beispielsweise PE und PP ein, wobei es sich bei der Vorbehandlung um Coronabehandlungen oder artverwandte Techniken zur Erhöhung der Oberflächenspannung oder Vorbeschichtungen des Polyolefins mit Acrylaten handeln kann. Alternativ sind auch andere Vorbehandlungen, wie beispielsweise mit Gasflammen oder Ethylenvinylacetat(EVA)-Beschichtungen, denkbar.

Dem Polyolefinfolienmaterial können die üblichen Hilfsmittel zugemischt sein. Diese Hilfsmittel werden eingesetzt, um eine bessere Bedruckbarkeit zu erreichen, antistatische Wirkung zu erzeugen, die Abrollbarkeit als Rollenmaterial zu gewährleisten u.ä.. Alle diese Materialien weisen aber als Hauptbestandteil, d.h. mindestens 80 Gew.-%, bezogen auf das Gesamtgewicht des Polyolefinfolienmaterials, das entsprechende Polyolefin auf.

Um solche Folientüten bzw. -beutel herzustellen können verschiedene Techniken und Verfahren zum Einsatz kommen. Geeignet sind beispielsweise das Druckbeschichten, das Koextrusionsbeschichten, die Flachfolien-Koextrusion und die Blasfolien-Koextrusion (s.a. Plastics Extrusion Technology, Friedhelm Hensen (Herausgeber), Carl Hanser Verlag München, 1988).

Für die Herstellung der Längs- und Bodenklebung sind die dem Fachmann dafür bekannten Technologien einsetzbar, zum Beispiel Düsenauftrag, Radauftrag oder mittels Klischees.

Um zu Klebezwecken eingesetzt werden zu können, liegen die Klebstoffe der Erfindung bevorzugt in Form von Kissen oder Granulat vor, das selbst mittels Extrusion bei erhöhter Temperatur und anschließendem Schneiden, insbesondere Strangschnitt (nach Abkühlung, beispielsweise mittels kaltem Wasser) hergestellt wurde.

Bei besonders haftklebrigen Produkten kann es vorteilhaft sein, den Klebstoff in Silikonpapier oder eine entsprechende Kunststofffolie zu verpacken. Bei der Herstellung der Verpackung kann der Schmelzklebstoff der Erfindung zwischen mindestens zwei Materialien aufgetragen werden.

Ein Aspekt der Erfindung richtet sich auf solche Verpackungen, insbesondere für Lebensmittel, die die beschriebenen verklebten Folien enthalten.

Wie bereits oben mehrfach beschrieben, kann die Verpackung die Form eines Beutels oder einer Tüte haben. Die Verpackungen, die derart hergestellt werden, lassen sich für zahlreiche Anwendungen einsetzen: z.B., als Lebensmittelverpackungen, insbesondere für Brotwaren, Gebäcke, Süßwaren, Gewürze, Tee, Kaffee, Käse, Wurst und solche, die vor dem Verzehr im Ofen oder der Mikrowelle erwärmt werden. Weiterhin eignen sich solche Verpackungen für Medikamente, Hygienetücher, Reinigungstücher, etc., wobei die Tücher mit Reinigungsemulsionen oder kosmetisch wirksamen Substanzen versetzt sein können.

Die folgenden Beispiele dienen der Erläuterung der Erfindung, die Erfindung ist aber nicht darauf beschränkt.

### Beispiele

### Beispiel 1: Klebstoffformulierung

Im Folgenden wird der Begriff Kohlenwasserstoffharz auch als KW-Harz bezeichnet.

Die Glasübergangstemperatur T_{g} wurde gemäß DIN EN 1427 bestimmt.

Die Schmelzviskosität wurde gemäß DIN 53019 bestimmt.

Das Molekulargewicht Mₙ wurde gemäß DIN 55672, wie vorstehend beschrieben, bestimmt.

Es wurden Klebstoffzusammensetzungen hergestellt, die bezogen auf die Zusammensetzung die folgenden Bestandteile enthielt:

**Formulierung 1:**

| | |
|---|---|
| Poly-α-Olefin (Mₙ 5.000 g/mol; T_{g} 96°C; Schmelzviskosität 2.500 mPas) | 70,0 Gew.-% |
| Poly-α-Olefin (Mₙ 18.100 g/mol; T_{g} 107°C; Schmelzviskosität 50.000 mPas) | 15,0 Gew.-% |
| Escorez 5400 (ExxonMobil Chemical), cycloaliphatisches KW-Harz | 5,0 Gew.-% |
| Polybut 10 (Productos Uhpon), Polyisobutylen | 9,5 Gew.-% |
| Irganox 1010 (BASF SE), Antioxidans | 0,5 Gew.-% |

Das so erhaltene Produkt zeigte eine sehr gute Haftung auf polyolefinischem Beutematerial in Verbindung mit einer sehr hohen Kohäsion.

**Formulierung 2:**

| | |
|---|---|
| Poly-α-Olefin (Mₙ 5.000 g/mol; T_{g} 96°C; Schmelzviskosität 2.500 mPas) | 70,0 Gew.-% |
| Poly-α-Olefin (Mₙ 18.100 g/mol; T_{g} 107°C; Schmelzviskosität 50.000 mPas) | 15,0 Gew.-% |
| Sylvatac RE 85 (Arizona Chemical), Kolophonium-Glycerolester | 5,0 Gew.-% |
| Polybut 10 (Productos Uhpon) Polyisobutylen | 9,5 Gew.-% |
| Irganox 1010 (BASF SE), Antioxidans | 0,5 Gew.-% |

Das so erhaltene Produkt wies gegenüber Formulierung 1 eine noch weiter erhöhte Adhäsion auf.

**Formulierung 3:**

| | |
|---|---|
| Poly-α-Olefin (Mₙ 5.000 g/mol; T_{g} 96°C; Schmelzviskosität 2.500 mPas) | 15,0 Gew.-% |
| Poly-α-Olefin (Mₙ 18.100 g/mol; T_{g} 107°C; Schmelzviskosität 50.000 mPas) | 40,0 Gew.-% |
| Regalite S1100 (Eastman Chemical Company), cycloaliphatisches KW-Harz | 29,5 Gew.-% |
| Polybut 10 (Productos Uhpon), Polyisobutylen | 12,0 Gew.-% |
| Polybut 30 (Productos Uhpon), Polyisobutylen | 3,0 Gew.-% |
| Irganox 1010 (BASF SE), Antioxidans | 0,35 Gew.-% |
| Irganox PS 802 FL (BASF SE), Antioxidans | 0,15 Gew.-% |

Dieser Klebstoff wies eine Viskosität von etwa 11300 mPas bei 160°C (Brookfield RVT Spindel 21) und einen Erweichungspunkt von 87,8/87,9°C (ASTM E 28) auf. Bei einer Beschichtung von PET 50 µm in einer Menge von 40g/m² mit einem Heiztisch/Heizrakel bei 150°C Klebstofftemperatur, zeigte der Klebstoff eine Verbundhaftung auf Stahl bzw. PE nach 20 Minuten von 31 bzw. 15 N/25mm und nach 24 h auf Stahl bzw. Glas von 33 bzw. 32 N/25mm. Nach dem erneuten Verkleben (130°C, 30 Sekunden, 5kg/100cm²) wurden nach 24h Verbundhaftungen auf Stahl bzw. PE bzw. Glas von 35 (70% Adhäsionsbruch) bzw. 17 bzw. 24 N/25mm erreicht.

**Formulierung 4:**

| | |
|---|---|
| Poly-α-Olefin (Mₙ 5.000 g/mol; T_{g} 96°C; Schmelzviskosität 2.500 mPas) | 15,0 Gew.-% |
| Poly-α-Olefin (Mₙ 18.100 g/mol; T_{g} 107°C; Schmelzviskosität 50.000 mPas) | 35,0 Gew.-% |
| Regalite R1010 (Eastman Chemical Company), cycloaliphatisches KW-Harz | 5,0 Gew.-% |
| Regalite S1100 (Eastman Chemical Company), cycloaliphatisches KW-Harz | 29,5 Gew.-% |
| Polybut 10 (Productos Uhpon), Polyisobutylen | 12,0 Gew.-% |
| Polybut 30 (Productos Uhpon), Polyisobutylen | 3,0 Gew.-% |
| Irganox 1010 (BASF SE), Antioxidans | 0,35 Gew.-% |
| Irganox PS 802 FL (BASF SE), Antioxidans | 0,15 Gew.-% |

Dieser Klebstoff wies eine Viskosität von etwa 7500 mPas bei 160°C (Brookfield RVT, Spindel 21) und einen Erweichungspunkt von 85,2/85,4°C (ASTM E 28) auf. Bei einer Beschichtung von PET 50 µm in einer Menge von 40g/m² mit einem Heiztisch/Heizrakel bei 150°C Klebstofftemperatur, zeigte der Klebstoff eine Verbundhaftung auf Stahl bzw. PE bzw. Glas nach 20 Minuten von 23 bzw. 17 bzw. 26 N/25mm und nach 24 h auf Stahl bzw. PE bzw. Glas von 37 bzw. 8 bzw. 41 (50% Adhäsionsbruch) N/25mm. Nach dem erneuten Verkleben (130°C, 30 Sekunden, 5kg/100cm²) wurden nach 24h Verbundhaftungen auf Stahl bzw. PE bzw. Glas von 35 (80% Adhäsionsbruch) bzw. 23 bzw. 37 (80% Kohäsionsbruch) N/25mm erreicht.

## Patentansprüche

1. Schmelzklebstoff, enthaltend, bevorzugt bestehend aus,
a) 50 bis 85 Gew.-% mindestens eines polyolefinischen Polymers;
b) 1 bis 40 Gew.-% mindestens eines klebrig machenden Harzes;
c) bis 15 Gew.-% mindestens eines Weichmachers; und
d) 0 bis 30 Gew.-% mindestens eines Additivs und/oder Zusatzstoffs ausgewählt aus Stabilisatoren, Haftvermittlern, Füllstoffen oder Pigmenten, Wachsen und/oder anderen Polymeren, welche bevorzugt (Meth)acrylsäureester sind; oder Kombinationen davon,
**dadurch gekennzeichnet, dass** das mindestens eine polyolefinische Polymer eine Mischung ist aus:
a1) mindestens einem ersten polyolefinischen Polymer mit einem Molekulargewicht Mₙ von < 10.000 g/mol in einer Menge von 20 bis 80 Gew.-% bezogen auf die Gesamtmenge an polyolefinischem Polymer und
a2) mindestens einem zweiten polyolefinischen Polymer mit einem Molekulargewicht Mₙ von > 10.000 g/mol in einer Menge von 20 bis 80 Gew.-% bezogen auf die Gesamtmenge an polyolefinischem Polymer; und
**dadurch gekennzeichnet, dass** der Weichmacher ausgewählt wird aus Poly(iso)butylen und flüssigen oder pastösen hydrierten Kohlenwasserstoffen.

2. Schmelzklebstoff nach Anspruch 1, **dadurch gekennzeichnet, dass** das mindestens eine polyolefinische Polymer ausgewählt wird aus Homo- und Copolymeren von Polyolefinen, insbesondere der Gruppe bestehend aus Poly- α-Olefinen, vorzugsweise ataktischen Poly-α-Olefinen (APAO) auf Basis von Ethylen, Propen und/oder Buten, und Ethylen/α-Olefin und Propylen/α-Olefin-Copolymeren, vorzugsweise Copolymere von Ethylen und Propen, 1-Buten, 1-Hexen, 1-Octen oder Kombinationen davon.

3. Schmelzklebstoff nach Anspruch 1 oder 2, **dadurch gekennzeichnet, dass** es sich bei dem mindestens einen klebrig machenden Harz um ein Harz oder eine Harzmischung handelt, die mindestens ein voll- oder teilhydriertes Kohlenwasserstoffharz und/oder mindestens ein Naturharz auf Kolophonium- oder Tallharzbasis oder eines Methyl-, Pentaerythritol- oder Glycerinesters davon umfasst, wobei das mindestens eine voll- oder teilhydrierte Kohlenwasserstoffharz optional ein cycloaliphatisches Harz, ein aromatisch modifiziertes Harz, ein Polyterpen, ein Terpen-Phenolharz, ein 1,3-Pentadienharz, ein Cyclopentadienharz, ein 2-Methyl-2-Buten-Copolymer oder ein Derivat der vorgenannten umfasst.

4. Schmelzklebstoff nach einem der Ansprüche 1 bis 3, **dadurch gekennzeichnet, dass** der Weichmacher Polyisobutylen mit einem Molekulargewicht Mw kleiner 5000 g/mol, umfasst.

5. Schmelzklebstoff nach einem der Ansprüche 1 bis 4, **dadurch gekennzeichnet, dass** das mindestens eine Additiv und/oder der Zusatzstoff bezogen auf den Schmelzklebstoff 0,1 bis 3 Gew.-% Additive, insbesondere Stabilisatoren gegen thermischen, oxidativen und UVinduzierten Abbau, umfassen.

6. Schmelzklebstoff nach einem der Ansprüche 1 bis 5, **dadurch gekennzeichnet, dass** der Schmelzklebstoff bei 160°C (Brookfield CAP, Spindel 8) eine Viskosität im Bereich von 500 bis 100.000 mPas aufweist.

7. Verwendung eines Schmelzklebstoffs nach einem der Ansprüche 1 bis 6 zum Verkleben von folienförmigen Substraten, insbesondere Polyolefinfolien, Gewebe oder Vliesstoffen.

8. Verfahren zur Herstellung von Verpackungen aus Polyolefinfolien, insbesondere Beuteln oder Tüten, die Folien aus Polyolefinen umfassen, umfassend das teilflächige Verkleben von mindestens zwei Polyolefinfolien in Form von Längs- und/oder Bodenklebungen, **dadurch gekennzeichnet, dass** zum Verkleben der Schmelzklebstoff nach einem der Ansprüche 1 bis 6 verwendet wird.

9. Verwendung nach Anspruch 7 oder Verfahren nach Anspruch 8, **dadurch gekennzeichnet, dass** es sich bei der Polyolefinfolie um eine Folie handelt, die zu mindestens 80 Gew.-% aus, optional oberflächenbehandelten oder -beschichteten, Polyethylen (PE) oder Polypropylen (PP) besteht, bezogen auf das Gesamtgewicht der Polyolefinfolie.

10. Verpackung aus Polyolefinfolien, insbesondere Beutel oder Tüten, die Folien aus Polyolefinen umfassen, erhältlich gemäß dem Verfahren nach Anspruch 8.

11. Verfahren zur Herstellung von verklebtem Gewebe oder Vliesstoff, umfassend das teil- oder vollflächige Verkleben von mindestens zwei Substraten, **dadurch gekennzeichnet, dass** mindestens ein Substrat eine Gewebe oder Vliesstoff ist und, dass zum Verkleben der Schmelzklebstoff nach einem der Ansprüche 1 bis 6 verwendet wird.

## Claims

1. A hot-melt adhesive, containing, preferably consisting of,
a) 50 to 85 wt.% of at least one polyolefinic polymer;
b) 1 to 40 wt.% of at least one tackifying resin;
c) up to 15 wt.% of at least one plasticizer; and
d) 0 to 30 wt.% of at least one additive and/or additional substance selected from stabilizers, adhesion promoters, fillers or pigments, waxes and/or other polymers, which are preferably (meth)acrylic acid esters, or combinations thereof,
**characterized in that** the at least one polyolefinic polymer is a mixture of:
a1) at least one first polyolefinic polymer having a molecular weight Mₙ of < 10,000 g/mol in an amount of from 20 to 80 wt.% based on the total amount of polyolefinic polymer and
a2) at least one second polyolefinic polymer having a molecular weight Mn of > 10,000 g/mol in an amount of from 20 to 80 wt.% based on the total amount of polyolefinic polymer; and
**characterized in that** the plasticizer is selected from poly(iso)butylene and liquid or pasty hydrogenated hydrocarbons.

2. The hot-melt adhesive according to claim 1, **characterized in that** the at least one polyolefinic polymer is selected from homo- and copolymers of polyolefins, in particular the group consisting of poly-α-olefins, preferably atactic poly-α-olefins (APAO) based on ethylene, propene and/or butene, and ethylene/a-olefin and propylene/a-olefin copolymers, preferably copolymers of ethylene and propene, 1-butene, 1-hexene, 1-octene or combinations thereof.

3. The hot-melt adhesive according to claim 1 or 2, **characterized in that** the at least one tackifying resin is a resin or resin mixture which comprises at least one fully or partially hydrogenated hydrocarbon resin and/or at least one natural resin based on colophony or tall resin or of a methyl ester, pentaerythritol ester or glycerol ester thereof, the at least one fully or partially hydrogenated hydrocarbon resin optionally comprising a cycloaliphatic resin, an aromatically modified resin, a polyterpene, a terpene phenolic resin, a 1,3-pentadiene resin, a cyclopentadiene resin, a 2-methyl-2-butene copolymer, or a derivative of the above.

4. The hot-melt adhesive according to one of claims 1 to 3, **characterized in that** the plasticizer comprises polyisobutylene having a molecular weight Mw of less than 5,000 g/mol.

5. The hot-melt adhesive according to one of claims 1 to 4, **characterized in that** the at least one additive and/or additional substance comprise, based on the hot-melt adhesive, 0.1 to 3 wt.% of additives, in particular stabilizers against thermal, oxidative and UV-induced degradation.

6. The hot-melt adhesive according to one of claims 1 to 5, **characterized in that** the hot-melt adhesive has a viscosity in the range of from 500 to 100,000 mPas at 160 °C (Brookfield CAP, spindle 8).

7. The use of a hot-melt adhesive according to one of claims 1 to 6 for bonding film-like substrates, in particular polyolefin films, woven fabrics or nonwoven fabrics.

8. A method for producing packaging made of polyolefin films, in particular bags or pouches comprising films made of polyolefins, comprising the partial-surface bonding of at least two polyolefin films in the form of longitudinal and/or bottom bonding, **characterized in that** the hot-melt adhesive according to one of claims 1 to 6 is used for the bonding.

9. The use according to claim 7 or the method according to claim 8, **characterized in that** the polyolefin film is a film that consists of at least 80 wt.% of optionally surface-treated or -coated polyethylene (PE) or polypropylene (PP), based on the total weight of the polyolefin film.

10. A packaging made of polyolefin films, in particular bags or pouches comprising films made of polyolefins, which can be obtained in accordance with the method according to claim 8.

11. A method for producing bonded woven fabric or nonwoven fabric, comprising the partial- or full-surface bonding of at least two substrates, **characterized in that** at least one substrate is a woven fabric or a nonwoven fabric, and **in that** the hot-melt adhesive according to one of claims 1 to 6 is used for the bonding.

## Revendications

1. Adhésif thermofusible contenant, de préférence constitué de,
a) 50 à 85 % en poids d'au moins un polymère polyoléfinique ;
b) 1 à 40 % en poids d'au moins une résine adhésive ;
c) jusqu'à 15 % en poids d'au moins un plastifiant ; et
d) 0 à 30 % en poids d'au moins un additif et/ou adjuvant choisis parmi les stabilisants, promoteurs d'adhérence, charges ou pigments, cires et/ou autres polymères, qui sont de préférence des esters d'acide (méth)acrylique ; ou leurs combinaisons,
**caractérisé en ce que** l'au moins un polymère polyoléfinique est un mélange :
a1) d'au moins un premier polymère polyoléfinique de poids moléculaire Mₙ < 10 000 g/mol en une quantité de 20 à 80 % en poids par rapport à la quantité totale de polymère polyoléfinique et
a2) d'au moins un second polymère polyoléfinique de masse moléculaire Mₙ > 10 000 g/mol en une quantité de 20 à 80 % en poids par rapport à la quantité totale de polymère polyoléfinique ; et
**caractérisé en ce que** le plastifiant est choisi parmi le poly(iso)butylène et les hydrocarbures hydrogénés liquides ou pâteux.

2. Adhésif thermofusible selon la revendication 1, **caractérisé en ce que** l'au moins un polymère polyoléfinique est choisi parmi les homopolymères et les copolymères de polyoléfines, en particulier dans le groupe constitué par les poly-α-oléfines, de préférence les poly-α-oléfines atactiques (APAO) à base de copolymères d'éthylène, de propène et/ou de butène, et d'éthylène/α-oléfine et de propylène/α-oléfine, de préférence de copolymères d'éthylène et de propène, de 1-butène, de 1-hexène, de 1-octène ou leurs combinaisons.

3. Adhésif thermofusible selon la revendication 1 ou 2, **caractérisé en ce que** l'au moins une résine adhésive est constituée d'une résine ou d'un mélange de résines contenant au moins une résine hydrocarbonée totalement ou partiellement hydrogénée et/ou au moins une résine naturelle à base de colophane ou de résine d'huile de pin ou d'un de leurs esters de méthyle, de pentaérythritol ou de glycérol, l'au moins une résine hydrocarbonée totalement ou partiellement hydrogénée comprenant éventuellement une résine cycloaliphatique, une résine aromatiquement modifiée, un polyterpène, une résine terpène-phénolique, une résine 1,3-pentadiène, une résine cyclopentadiène, un copolymère de 2-méthyl-2-butène ou un dérivé de ceux-ci.

4. Adhésif thermofusible selon l'une des revendications 1 à 3, **caractérisé en ce que** le plastifiant comprend du polyisobutylène de poids moléculaire Mw inférieur à 5 000 g/mol.

5. Adhésif thermofusible selon l'une des revendications 1 à 4, **caractérisé en ce que** l'au moins un additif et/ou l'adjuvant comprennent 0,1 à 3 % en poids d'additifs, en particulier de stabilisants contre la dégradation thermique, oxydative ou induite par les UV, sur la base de l'adhésif thermofusible.

6. Adhésif thermofusible selon l'une des revendications 1 à 5, **caractérisé en ce que** l'adhésif thermofusible présente une viscosité comprise entre 500 et 100 000 mPa.s à 160 °C (Brookfield CAP, broche 8).

7. Utilisation d'un adhésif thermofusible selon l'une des revendications 1 à 6 permettant le collage de substrats en forme de film, en particulier de films de polyoléfine, de tissus ou de non-tissés.

8. Procédé permettant la fabrication d'emballages en films de polyoléfine, en particulier de sachets ou de sacs comprenant des films de polyoléfines, comprenant le collage partiel d'au moins deux films de polyoléfine sous forme de collage longitudinal et/ou de fond, **caractérisé en ce que** l'adhésif thermofusible selon l'une des revendications 1 à 6 est utilisé pour le collage.

9. Utilisation selon la revendication 7 ou procédé selon la revendication 8, **caractérisé en ce que** le film de polyoléfine est un film constitué d'au moins 80 % en poids de polyéthylène (PE) ou de polypropylène (PP), éventuellement traité ou enduit en surface, par rapport au poids total du film de polyoléfine.

10. Emballages en films de polyoléfine, en particulier de sachets ou de sacs comprenant des films de polyoléfines, obtenus selon le procédé selon la revendication 8.

11. Procédé permettant la fabrication de tissu ou de non-tissé collé, comprenant le collage sur une partie ou sur toute la surface d'au moins deux substrats, **caractérisé en ce qu'**au moins un substrat est un tissu ou un non-tissé, et que l'adhésif thermofusible selon l'une des revendications 1 à 6 est utilisé pour le collage.
